(19) Europäisches Patentamt
European Patent Office
Office européen des brevets

(11) **EP 4 613 587 A1**

(12) **EUROPEAN PATENT APPLICATION**
published in accordance with Art. 153(4) EPC

(43) Date of publication:
**10.09.2025 Bulletin 2025/37**

(21) Application number: **24820919.9**

(22) Date of filing: **04.03.2024**

(51) International Patent Classification (IPC):
**B60W 20/15** (2016.01)    **B60W 30/20** (2006.01)
**B60W 10/08** (2006.01)

(86) International application number:
**PCT/CN2024/079839**

(87) International publication number:
**WO 2025/156364 (31.07.2025 Gazette 2025/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.01.2024 CN 202410092003**

(71) Applicant: **Jing-Jin Electric Technologies Co., Ltd
Beijing 100023 (CN)**

(72) Inventors:
• **JU, Longyu
 Beijing 100023 (CN)**
• **YU, Ping
 Beijing 100023 (CN)**
• **YANG, Fuyuan
 Beijing 100023 (CN)**
• **WANG, Runna
 Beijing 100023 (CN)**
• **XING, Wei
 Beijing 100023 (CN)**

(74) Representative: **Kohler Schmid Möbus
Patentanwälte
Partnerschaftsgesellschaft mbB
Gropiusplatz 10
70563 Stuttgart (DE)**

(54) **ENGINE TORQUE PULSATION CANCELLATION METHOD AND HYBRID POWER SYSTEM**

(57)     A method for canceling engine torque pulsation and a hybrid power system are disclosed. The method is applied to a hybrid power system and comprises: acquiring a pulsation function in which an engine torque pulsation changes with a crank connecting rod angle; constructing a torsional vibration offset function in which an offset torque changes with the crank connecting rod angle, and adding control parameters to the torsional vibration offset function to optimize it, so that a sum of the offset torque and the engine torque pulsation is equal to or close to 0; acquiring state data of the hybrid power system and correcting the control parameters based on the state data; and when the engine and the motor work, determining a corresponding offset torque command for the motor based on the torsional vibration offset function, and superimposing the offset torque command on an output control of the motor during normal operation. According to the present disclosure, feedback adjustment of pulsation cancellation can be achieved, a closed-loop control logic can be formed, so that the canceling engine torque pulsation can achieve the best effect in reducing the rotation speed fluctuation and vibration of the hybrid power system throughout the entire lifetime of vehicle.

Step 1

acquiring a pulsation function in which an engine torque pulsation changes with a crank connecting rod angle under various working conditions

Step 2

constructing a torsional vibration offset function in which an offset torque changes with the crank connecting rod angle, and adding control parameters to the torsional vibration offset function to optimize it, so that a sum of the offset torque and the engine torque pulsation is equal to or close to 0 in an entire angle domain of crank connecting rod angle

Step 3

acquiring state data of the hybrid power system including a system rotation speed and correcting the control parameters based on the state data

Step 4

when the engine and the motor work, acquiring the crank connecting rod angle, calculating a required offset torque according to the torsional vibration offset function, determining a corresponding offset torque command for the motor based on the required offset torque, and superimposing the offset torque command on an output control of the motor during normal operation

FIG. 1

**Description**

CROSS-REFERENCE TO RELATED APPLICATION

This application claims priority to the Chinese patent application No. 202410092003.6 filed with the Chinese Patent Office on January 23, 2024 and entitled "A Method for Canceling Engine Torque Pulsation and a Hybrid Power System", the content of which is hereby incorporated by reference in its entirety.

TECHNICAL FIELD

The present disclosure belongs to the technical field of power control and particularly relates to a method for canceling engine torque pulsation and a hybrid power system.

BACKGROUND

The hybrid power technology, i.e., the vehicle power system comprising both an engine and a motor, has both the advantages of high energy density and easy replenishment of fossil fuels, and the advantages of high energy efficiency and low emission of electric vehicles, and has been highly valued by researchers and favored by consumers increasingly in recent years.

In the hybrid power system, the engine generates power through the ignition in each cylinder. During the ignition process, impact loads will be generated, and the pulsation amplitude of the output torque at the end of the crank train will probably be several times its average load, thereby leading to component fatigue and vibration noise problems. In order to suppress the torque pulsation of the engine and improve the ride comfort of hybrid power vehicles, researchers and new energy enterprises have conducted in-depth research and proposed various pulsation suppression and control methods.

For example, a method for suppressing engine torque pulsation was proposed in the patent CN202110186641.0, in which the instantaneous torque fluctuation of the engine is offset by adjusting the instantaneous torque of the motor at high frequencies. Although it can effectively reduce the speed fluctuation and vibration of the hybrid power system, after several years of vehicle use, phenomena such as carbon deposition in engine cylinder and spark plug aging may occur, leading to changes in the engine output characteristics. In such a situation, although the method for suppressing engine torque pulsation can still reduce speed fluctuations and vibration, the best control effect cannot be achieved.

SUMMARY

With respect to the above problems, the present disclosure provides a method for canceling engine torque pulsation and a hybrid power system to overcome or at least partially solve the above problems.

In order to achieve the above object, the present disclosure adopts the following technical solutions.

An aspect of the present disclosure provides a method for canceling engine torque pulsation, wherein the method is applied to a hybrid power system and comprises:

acquiring a pulsation function in which an engine torque pulsation changes with a crank connecting rod angle under various working conditions;

constructing a torsional vibration offset function in which an offset torque changes with the crank connecting rod angle, and adding control parameters to the torsional vibration offset function to optimize it, so that a sum of the offset torque and the engine torque pulsation is equal to or close to 0 in an entire angle domain of crank connecting rod angle;

acquiring state data of the hybrid power system and correcting the control parameters based on the state data, wherein the state data includes a system rotation speed; and

when the engine and motor work, acquiring the crank connecting rod angle, calculating a required offset torque according to the torsional vibration offset function, determining a corresponding offset torque command for the motor based on the required offset torque, and superimposing the offset torque command on an output control of the motor during normal operation.

Further, the control parameters include:

one or more of a phase advance amount of the crank connecting rod angle, a scaling amount for scaling the torsional vibration offset function, and a translating amount for translating the torsional vibration offset function.

Further, when the control parameters include the translating amount for translating the torsional vibration offset function, the step of correcting the control parameters based on the state data comprises:

calculating an average system rotation speed based on the system rotation speed, comparing the average system rotation speed with a control command rotation speed of the motor, and adjusting the translating amount based on a comparison result.

Further, the step of adjusting the translating amount based on the comparison result is specially:

if the average system rotation speed is greater than the control command rotation speed of the motor, reducing the translating amount until the average system rotation speed is consistent with the control command rotation speed of the motor;
if the average system rotation speed is lower than the control command rotation speed of the motor, increasing the translating amount until the average system rotation speed is consistent with the control command rotation speed of the motor.

Further, when the control parameters include the phase advance amount of the crank connecting rod angle and the scaling amount for scaling the torsional vibration offset function, the step of correcting the control parameters based on the state data comprises:
calculating a rotation speed fluctuation amount based on the system rotation speed, comparing the rotation speed fluctuation amount with an initial rotation speed fluctuation amount of the hybrid power system, and adjusting the phase advance amount and the scaling amount based on a comparison result.

Further, the step of adjusting the phase advance amount and the scaling amount based on the comparison result is specially:

if a difference between the rotation speed fluctuation amount and the initial rotation speed fluctuation amount is greater than a threshold fluctuation amount, adjusting the phase advance amount and the scaling amount using an adaptive control logic to minimize the rotation speed fluctuation amount, and assigning the rotation speed fluctuation amount to the initial rotation speed fluctuation amount;
if the difference between the rotation speed fluctuation amount and the initial rotation speed fluctuation amount is not greater than the threshold fluctuation amount, not adjusting the phase advance amount and the scaling amount.

Further, when the control parameters include the scaling amount for scaling the torsional vibration offset function, the method for canceling engine torque pulsation further comprises:
according to actual vibration reduction requirements, setting amplitude upper limits of applying torsional vibration cancellation for different working conditions.

Further, the step of according to actual vibration reduction requirements, setting amplitude upper limits of applying torsional vibration cancellation for different working conditions is specially:

if the rotation speed fluctuation of the hybrid power system is slight and the vibration caused does not affect ride comfort, setting a small amplitude upper limit of applying torsional vibration cancellation;
if the rotation speed fluctuation of the hybrid power system is severe, setting a large amplitude upper limit of applying torsional vibration cancellation.

Further, the method for canceling engine torque pulsation further comprises:

acquiring optimization results of the control parameters under various working conditions through experimental calibration or simulation calculation, and compiling the optimization results into a table;
when the engine and the motor work, based on actual working conditions acquired, searching for corresponding control parameters in the table and dynamically updating the control parameters.

Another aspect of the present disclosure provides a hybrid power system. The hybrid power system comprises an engine and a motor, and performs the method for canceling engine torque pulsation as described above.

The advantages and beneficial effects of the present disclosure are as follows.

In the method for canceling engine torque pulsation of the present disclosure, by adding control parameters to the torsional vibration offset function, the torsional vibration offset function is optimized so that the offset torque actually output by the motor based on the torsional vibration offset function is closer to the engine torque pulsation, thereby improving the effect of engine pulsation cancellation. Moreover, by correcting the control parameters based on the state data of the hybrid power system, feedback adjustment of pulsation cancellation can be achieved, so that the method for canceling engine torque pulsation can achieve the best effect in reducing the rotation speed fluctuation and vibration of the hybrid power system throughout the entire lifetime of vehicle.

## BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present disclosure. Moreover, throughout the drawings, the same reference numerals are used to denote the same components. In the drawings:

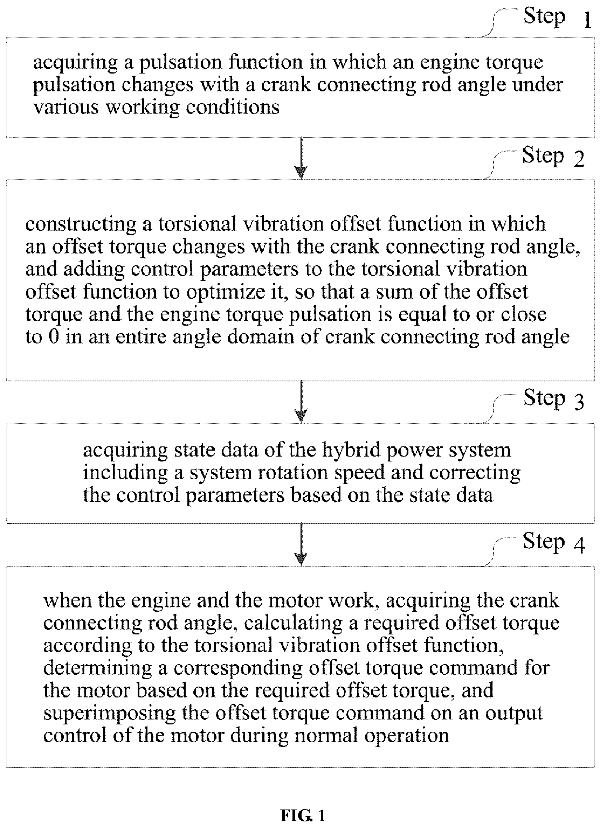

FIG 1 is a flowchart of a method for canceling engine torque pulsation in an embodiment of the present disclosure.

## DETAILED DESCRIPTION

In order to make the object, technical solutions, and advantages of the present disclosure clearer, the present disclosure will be described clearly and completely in conjunction with the specific embodiments and corresponding drawings. Obviously, the embodiments described are only part of rather than all of the embodiments of the present disclosure. Based on the embodiments in the present disclosure, all other embodiments obtained by those of ordinary skill in the art without paying creative work shall fall within the protection scope of the present disclosure.

The technical solutions provided by the embodiments of the present disclosure will be described in detail below in conjunction with the accompanying drawings.

An embodiment of the present disclosure provides a method for canceling engine torque pulsation, which is applied to a hybrid power system. The hybrid power system comprises an engine and a motor, and a crankshaft of the engine is rigidly connected to a rotor of the motor. A flywheel structure may be provided or may not be provided between the engine and the motor. In this embodiment, preferably, the flywheel structure is not provided. As shown in FIG 1, the method for canceling engine torque pulsation specifically comprises the following steps:
Step 1, acquiring a pulsation function $T_{wave}(\theta)$ in which an engine torque pulsation changes with a crank connecting rod angle $\theta$ under various working conditions.

Specifically, first, a torque output function $T_{engine}(\theta)$ of the engine in which an engine output torque changes with the crank connecting rod angle $\theta$ under various working conditions (various rotation speeds and torques) is acquired, and then the pulsation function $T_{wave}(\theta)$ in which the engine torque pulsation changes with the crank connecting rod angle $\theta$ is determined based on the torque output function $T_{engine}(\theta)$. The pulsation function $T_{wave}(\theta)$ can be obtained by subtracting an average output torque $T_{average}$ of the engine from the torque output function $T_{engine}(\theta)$. The engine output torque can be obtained through experiments, that is, a torque sensor is arranged at the output end of the engine crankshaft to collect an instantaneous torque of the engine. Alternatively, the engine output torque can be obtained through a combination of experiments and calculation, that is, cylinder pressure sensors are arranged in each cylinder of the engine to collect each cylinder pressure. Then, based on information such as cylinder diameter, connecting rod length, crank length, piston mass, connecting rod mass, and piston bias amount, the engine output torque can be analyzed and calculated. Alternatively, the engine output torque can be obtained through simulation calculations.

Step 2, constructing a torsional vibration offset function $T_{offset}(\theta)$ in which an offset torque changes with the crank connecting rod angle $\theta$, and adding control parameters to the torsional vibration offset function $T_{offset}(\theta)$ to optimize it, so that a sum of the offset torque and the engine torque pulsation is equal to or close to 0 in an entire angle domain of the crank connecting rod angle.

The simplest way to construct the torsional vibration offset function $T_{offset}(\theta)$ is to set the torsional vibration offset function $T_{offset}(\theta)$ to the opposite value of the pulsation function $T_{wave}(\theta)$ at any crank connecting rod angle $\theta$, that is

$$T_{offset}(\theta) = - T_{wave}(\theta) \qquad (1)$$

In this way, theoretically, the sum of the offset torque and the engine torque pulsation at every angle is zero. If the torsional vibration offset function $T_{offset}(\theta)$ is superimposed to the output torque of the motor, the engine torque fluctuation can be offset completely.

Of course, function fitting may also be used to construct the torsional vibration offset function $T_{offset}(\theta)$, i.e., the torsional vibration offset function $T_{offset}(\theta)$ is a function in the form of sine waves, triangular waves, trapezoidal waves, or square waves, or a function in the form of several sine waves, triangular waves, trapezoidal waves, and/or square waves added together. For example, the torsional vibration offset function $T_{offset}(\theta)$ is constructed by superimposing two sine functions:

$$T_{offset}(\theta) = A_1 \cdot \sin(N \cdot \theta + \theta_1) + A_2 \cdot \sin(2N \cdot \theta + \theta_2) \qquad (2)$$

In the above formula, N represents the number of ignition per rotation of the engine, and $A_1$, $A_2$, $\theta_1$, and $\theta_2$ are characteristic parameters. The values of $A_1$, $A_2$, $\theta_1$, and $\theta_2$ can be determined by reasonable optimization strategies, so that the sum of the torsional vibration offset function $T_{offset}(\theta)$ and the pulsation function $T_{wave}(\theta)$ is very small, but complete cancellation is impossible.

Although the function fitting method has slightly lower potential for cancellation, it is easy to calculate and can reduce the occupancy of the load rate of the main control chip of the motor through reasonable design.

In addition, due to various factors affecting the motor control process, there is a certain difference between the actual output torque and the target output torque when the motor executes the torque output command corresponding to the target output torque. In order to make the actual output torque of the motor consistent with the target output torque, control parameters are added to the torsional vibration offset function $T_{offset}(\theta)$ to optimize it, so that the offset torque actually output by the motor based on the torsional vibration offset function $T_{offset}(\theta)$ can be as close as possible to the engine torque pulsation.

Step 3, acquiring state data of the hybrid power system including a system rotation speed $\omega$, and correcting the control parameters based on the state data.

Specifically, during actual vehicle driving, the state data of the hybrid power system is monitored and collected, and the control parameters are adjusted based on feedbacks from the state data; then, feedback adjustments are performed on the process of performing the method for canceling engine torque pulsation, so that after the vehicle's condition changes, the method for canceling engine torque pulsation can still offset the engine torque pulsation in the best state, thereby achieving the best control effect. The system rotation speed can be obtained through a rotary transformer of the motor without the need for any additional sensor, signal transmission harness, or signal transmission mechanism.

Step 4: during the operation of the engine and the motor, acquiring the crank connecting rod angle $\theta$, calculating a required offset torque based on the torsional vibration offset function $T_{offset}(\theta)$, determining a corresponding offset torque command for the motor based on the required offset torque, and superimposing the offset torque command on the output control of the motor during normal operation, so that when the motor outputs normal working torque it also outputs the offset torque in superimposition to offset the engine torsional vibration. The specific principle is to make the motor additionally output an offset torque whose direction is opposite to that of the engine torque pulsation and whose magnitude is the same as or close to that of the engine torque pulsation, so that the engine torque pulsation can be offset, and the component fatigue and vibration noise caused by torque pulsation can be significantly reduced.

The motor shaft angle can be obtained through real-time high-frequency detection, and then the crank connecting rod angle $\theta$ can be calculated.

The frequency of acquiring the motor shaft angle needs to be very high. Generally speaking, it must be ensured that there are at least 60, preferably 180 or more, sample points collected within one rotation of the motor. This requires a sampling frequency of 10 KHz or more, i.e., a sampling interval of less than 100 μs. Taking the vehicle's onboard engine as an example, it often communicates information with other external systems through the CAN (Controller Area Network) bus, and the time interval of sending and receiving messages on the CAN bus is often much greater than 100 μs. Therefore, it is difficult to meet the control requirements by relying on the engine to collect the crank connecting rod angle and then transmitting this information to the motor control system through the CAN bus. If the dynamic performance of the signal acquisition system is significantly improved, or a dedicated information transmission line is added to transmit this information at a higher frequency, the system cost will be significantly increased. Motors are generally equipped with a sensing system such as a rotary transformer or a Hall sensor. If, in the system design stage, the relationship between the motor shaft angle fed back from this sensor and the engine crank connecting rod angle was calibrated, this sensor can be used to monitor the motor shaft angle, and further calculate the engine crank connecting rod angle when implementing torsional vibration cancellation control. Since the sensing system such as the rotary transformer or the Hall sensor belongs to motor accessories, their information is naturally transmitted to the motor controller (without the need for CAN bus), and the motor control system can easily achieve a sampling frequency of more than 10 KHz without the need to add any other hardware for data collection of the power system. Of course, directly using the engine to collect the crank connecting rod angle and calculate the torsional vibration offset function still falls within the protection scope of the present disclosure.

In sum, in the method for canceling engine torque pulsation of this embodiment, by adding control parameters to the torsional vibration offset function, the torsional vibration offset function is optimized so that the offset torque actually output by the motor based on the torsional vibration offset function is closer to the engine torque pulsation, thereby improving the effect of engine pulsation cancellation. Moreover, by correcting the control parameters based on the state data of the hybrid power system, feedback adjustment of pulsation cancellation can be achieved, and a closed-loop control logic can be formed, so that the method for canceling engine torque pulsation can achieve the best effect in reducing the rotation speed fluctuation and vibration of the hybrid power system throughout the entire lifetime of vehicle.

In this embodiment, the control parameters include: a phase advance amount $\theta_{adjust}$ of the crank connecting rod angle $\theta$, a scaling amount $A_{adjust}$ for scaling the torsional vibration offset function $T_{offset}(\theta)$, and a translating amount $T_{adjust}$ for translating the torsional vibration offset function $T_{offset}(\theta)$.

Since the motor implements torque control commands by controlling current changes through a controller, the presence of inductance and reactance characteristics in the motor winding limits the current change rate, and it is also affected by specific torque control parameters (such as the proportional and integral factors of PID control algorithm), when the motor outputs a torque by executing a command corresponding to the target output torque, there is a difference between the actual output torque and the target output torque, so that there is a larger difference between the offset torque actually output by the motor according to the offset torque command and the engine torque fluctuation, and it is difficult to effectively offset engine torque fluctuations.

Since there are time delay and amplitude fluctuations in the motor controller from the generation of command to the implementation of control, the phase advance amount $\theta_{adjust}$ of the crank connecting rod angle $\theta$ is added to the torsional vibration offset function $T_{offset}(\theta)$, so that the motor controller executes the torque control command corresponding to the torsional vibration offset function $T_{offset}(\theta)$ in advance, thereby overcoming the problem of time delay. Moreover, scaling is performed on the torsional vibration offset function $T_{offset}(\theta)$, i.e., an actual torque control command can be scaled on the basis of the torsional vibration offset function $T_{offset}(\theta)$ to compensate for the effects of friction, stiffness, and damping, and the amplitude fluctuations can be overcome. In addition, due to the limit of motor torque change rate and the limit of torque output capacity, when the motor torque command fluctuates at a high frequency, there may be a difference between the sufficiencies of the actually output torque command to express positive and negative torques, and thus the average value of the actually output offset torques is not 0. Therefore, the actual control torque command can be achieved by superimposing a fixed torque value on the torsional vibration offset function $T_{offset}(\theta)$ to solve the problem of the average offset torque not being 0. That is,

$$T_{reqoffset}(\theta) = A_{adjust} \cdot T_{offset}(\theta + \theta_{adjust}) + T_{adjust} \qquad (3)$$

Wherein, $T_{reqoffset}(\theta)$ is the torsional vibration offset function after adding the control parameters; $A_{adjust}$ is a scaling factor (i.e., the scaling amount) for scaling the curve corresponding to the torsional vibration offset function $T_{offset}(\theta)$, which plays a scaling role; $\theta_{adjust}$ is a phase advance angle, which plays a role of offsetting the delay; $T_{adjust}$ is a translating amount for translating the torsional vibration offset function $T_{offset}(\theta)$, which plays a role of fine-tuning the average torque output by the motor (zeroing it) and ensuring that the torsional vibration cancellation control does not affect the finally output average torque.

Of course, in other embodiments, the control parameters may also include:

one or two of the phase advance amount $\theta_{adjust}$ of the crank connecting rod angle $\theta$, the scaling amount $A_{adjust}$ for scaling the torsional vibration offset function $T_{offset}(\theta)$, and the translating amount $T_{adjust}$ for translating the torsional vibration offset function $T_{offset}(\theta)$, which shall also fall within the protection scope of the present disclosure.

In this embodiment, when the control parameters include the translating amount $T_{adjust}$ for translating the torsional vibration offset function $T_{offset}(\theta)$, the step of correcting the control parameters based on the state data comprises:

calculating an average system rotation speed $\omega_{average}$ based on the system rotation speed $\omega$, comparing the average system rotation speed $\omega_{average}$ with a control command rotation speed of the motor, and adjusting the translating amount $T_{ajust}$ through feedback control logic based on a comparison result. Preferably, PID feedback control is used for feedback adjustment.

Specifically, under the condition that the system rotation speed $\omega$ and the torque control signal are stable, if the average system rotation speed $\omega_{average}$ is greater than the control command rotation speed of the motor, the translating amount $T_{ajust}$ is reduced to reduce the output torque value of the motor (if the motor operates in the power generation state, it means that the power generation torque increases), until the average system rotation speed $\omega_{average}$ is consistent with the control command rotation speed of the motor; if the average system rotation speed $\omega_{average}$ is less than the control command rotation speed of the motor, the translating amount $T_{adjust}$ is increased to increase the output torque value of the motor until the average system rotation speed $\omega_{average}$ is consistent with the control command rotation speed of the motor. In this way, the engine torsional vibration cancellation effect will be better.

In addition, when the control parameters include the phase advance amount $\theta_{adjust}$ of the crank connecting rod angle $\theta$ and the scaling amount $A_{adjust}$ for scaling the torsional vibration offset function $T_{offset}(\theta)$, the step of correcting the control parameters based on the state data further comprises:

calculating a rotation speed fluctuation amount $\omega_{wave}$ based on the system rotation speed $\omega$, comparing the rotation speed fluctuation amount $\omega_{wave}$ with an initial rotation speed fluctuation amount $\omega_{waveold}$ of the hybrid power system, and adjusting the phase advance amount $\theta_{adjust}$ and the scaling amount $A_{adjust}$ based on a comparison result.

Specifically, if the difference between the rotation speed fluctuation amount $\omega_{wave}$ and the initial rotation speed fluctuation amount $\omega_{waveold}$ is greater than a threshold fluctuation amount $\omega_{wavedeltalimit}$, that is, $\omega_{wave} - \omega_{waveold} > \omega_{wavedeltalimit}$, it indicates that the vibration reduction effect has significantly decayed compared to the previous state. Then, the phase advance amount $\theta_{adjust}$ and the scaling amount $A_{adjust}$ are adjusted using an adaptive control logic to minimize the rotation speed fluctuation amount $\omega_{wave}$, and the rotation speed fluctuation amount $\omega_{wave}$ is assigned to the initial rotation speed fluctuation amount $\omega_{waveold}$; if the difference between the rotation speed fluctuation amount $\omega_{wave}$ and the initial rotation speed fluctuation amount $\omega_{waveold}$ is not greater than the threshold fluctuation amount $\omega_{wavedeltalimit}$, that is,

$\omega_{wave} - \omega_{waveold} \leq \omega_{wavedeltalimit}$, it indicates that the vibration reduction effect has not significantly decayed compared to the previous state, then the phase advance amount $\theta_{adjust}$ and the scaling amount $A_{adjust}$ are not adjusted. Preferably, the initial value of the initial rotation speed fluctuation $\omega_{waveold}$ should be set to the state of the vehicle at the time of leaving the factory, and $\omega_{wavedeltalimit}$ is the standard for judging whether the rotation speed fluctuation has significantly decayed.

That is to say, during the vehicle's lifetime, if the vibration reducing effect of the method for canceling engine torque pulsation has significantly decayed, it can be judged that the scaling amount $A_{adjust}$ and the phase advance amount $\theta_{adjust}$ need to be adjusted, and an adaptive control logic is used to correct the scaling amount $A_{adjust}$ and the phase advance amount $\theta_{adjust}$ so as to achieve the object of minimizing the rotation speed fluctuation amount $\omega_{wave}$. Preferably, the adaptive control logic is an adaptive fuzzy control method or an adaptive neural network control method.

Of course, in other embodiments, the state data may also include system vibration, system near-field noise, vibration of various components in the cabin, and vehicle vibration noise. Feedback adjustment and adaptive control can be performed through state data other than the system rotation speed, and the method of feedback and control is the same as the case of system rotation speed, which will not be repeated here.

It should be noted that the more state data collected, the higher the system cost. Therefore, the types and quantities of state data collected should be matched with the grade of the target vehicle model.

In this embodiment, when the control parameters include the scaling amount $A_{adjust}$ for scaling the torsional vibration offset function $T_{offset}(\theta)$, the method for canceling engine torque pulsation further comprises:
according to actual vibration reduction requirements, setting amplitude upper limits of applying torsional vibration cancellation for different working conditions.

Specifically, if under a certain working condition, the rotation speed fluctuation of the hybrid power system is slight and the vibration caused does not affect ride comfort, a small amplitude upper limit of applying torsional vibration cancellation can be set for this working condition; if under a certain working condition, the rotation speed fluctuation of the hybrid power system is severe, a large amplitude upper limit of applying torsional vibration cancellation can be set for this working condition. The amplitude upper limit of applying torsional vibration cancellation can be achieved by controlling the upper limit of the scaling amount $A_{adjust}$. For example, the upper limit of $A_{adjust}$ is set to 0.2, so that the amplitude of torsional vibration cancellation does not exceed 20% of the amplitude of rotation speed fluctuation.

After performing the torsional vibration cancellation method, the effective values of three phase currents of the motor will slightly increase, which leads to an increase in motor heating and a slight decrease in power generation efficiency, there is a contradiction between energy efficiency and torsional vibration cancellation effect. Therefore, the performing of the method for canceling engine torque pulsation can be controlled according to specific usage requirements to achieve the most reasonable use. Of course, a switch quantity may also be set, such as by providing a physical switch button, to turn off and on the performing of the method for canceling engine torque pulsation.

In addition, the method for canceling engine torque pulsation further comprises:
acquiring optimization results of the control parameters under various working conditions through experimental calibration or simulation calculation, and compiling the optimization results into a table; when the engine and motor works, based on actual working conditions acquired, searching for corresponding control parameters in the table and dynamically updating the control parameters.

It should be noted that the optimization results of the control parameters are determined during the research and development stage. Although the control parameters can be adjusted to a certain extent to make the offset torque output by the motor close to the engine torque pulsation, in the actual vehicle driving stage, as the vehicle condition changes, dynamically updating the control parameters based on only the optimization results in the table cannot achieve the effect of completely canceling engine torsional vibration. Therefore, feedback adjustment of the control parameters is needed, that is, the control parameters need to be corrected. Moreover, when dynamically updating and correcting the control parameters, the amplitude upper limit of applying torsional vibration cancellation will not be exceeded.

In another embodiment of the present disclosure, a hybrid power system is provided, which comprises an engine and a motor and performs the above method for canceling engine torque pulsation. The hybrid power system has a good suppression effect on engine torque pulsation and a low vibration noise.

The above merely describes particular embodiments of the present disclosure. By the teaching of the present disclosure, a person skilled in the art can make other modifications or variations based on the above embodiments. A person skilled in the art should appreciate that, the detailed description above is only for the purpose of explaining the present disclosure, and the protection scope of the present disclosure should be subject to the protection scope of the claims.

## Claims

1. A method for canceling engine torque pulsation, **characterized in that**: the method is applied to a hybrid power system and comprises:

acquiring a pulsation function in which an engine torque pulsation changes with a crank connecting rod angle under various working conditions;

constructing a torsional vibration offset function in which an offset torque changes with the crank connecting rod angle, and adding control parameters to the torsional vibration offset function to optimize it, so that a sum of the offset torque and the engine torque pulsation is equal to or close to 0 in an entire angle domain of crank connecting rod angle;

acquiring state data of the hybrid power system and correcting the control parameters based on the state data, wherein the state data includes a system rotation speed; and

when the engine and the motor work, acquiring the crank connecting rod angle, calculating a required offset torque according to the torsional vibration offset function, determining a corresponding offset torque command for the motor based on the required offset torque, and superimposing the offset torque command on an output control of the motor during normal operation.

2. The method for canceling engine torque pulsation according to claim 1, **characterized in that**: the control parameters include:

one or more of a phase advance amount of the crank connecting rod angle, a scaling amount for scaling the torsional vibration offset function, and a translating amount for translating the torsional vibration offset function.

3. The method for canceling engine torque pulsation according to claim 2, **characterized in that**: when the control parameters include the translating amount for translating the torsional vibration offset function, the step of correcting the control parameters based on the state data comprises:

calculating an average system rotation speed based on the system rotation speed, comparing the average system rotation speed with a control command rotation speed of the motor, and adjusting the translating amount based on a comparison result.

4. The method for canceling engine torque pulsation according to claim 3, **characterized in that**: the step of adjusting the translating amount based on the comparison result is specially:

if the average system rotation speed is greater than the control command rotation speed of the motor, reducing the translating amount until the average system rotation speed is consistent with the control command rotation speed of the motor;

if the average system rotation speed is lower than the control command rotation speed of the motor, increasing the translating amount until the average system rotation speed is consistent with the control command rotation speed of the motor.

5. The method for canceling engine torque pulsation according to claim 2, **characterized in that**: when the control parameters include the phase advance amount of the crank connecting rod angle and the scaling amount for scaling the torsional vibration offset function, the step of correcting the control parameters based on the state data comprises:

calculating a rotation speed fluctuation amount based on the system rotation speed, comparing the rotation speed fluctuation amount with an initial rotation speed fluctuation amount of the hybrid power system, and adjusting the phase advance amount and the scaling amount based on a comparison result.

6. The method for canceling engine torque pulsation according to claim 5, **characterized in that**: the step of adjusting the phase advance amount and the scaling amount based on the comparison result is specially:

if a difference between the rotation speed fluctuation amount and the initial rotation speed fluctuation amount is greater than a threshold fluctuation amount, adjusting the phase advance amount and the scaling amount using an adaptive control logic to minimize the rotation speed fluctuation amount, and assigning the rotation speed fluctuation amount to the initial rotation speed fluctuation amount;

if the difference between the rotation speed fluctuation amount and the initial rotation speed fluctuation amount is not greater than the threshold fluctuation amount, not adjusting the phase advance amount and the scaling amount.

7. The method for canceling engine torque pulsation according to claim 2, **characterized in that**: when the control parameters include the scaling amount for scaling the torsional vibration offset function, the method for canceling engine torque pulsation further comprises:

according to actual vibration reduction requirements, setting amplitude upper limits of applying torsional vibration cancellation for different working conditions.

8. The method for canceling engine torque pulsation according to claim 7, **characterized in that**: the step of according to actual vibration reduction requirements, setting amplitude upper limits of applying torsional vibration cancellation for different working conditions is specially:

if the rotation speed fluctuation of the hybrid power system is slight and the vibration caused does not affect ride comfort, setting a small amplitude upper limit of applying torsional vibration cancellation;
if the rotation speed fluctuation of the hybrid power system is severe, setting a large amplitude upper limit of applying torsional vibration cancellation.

9. The method for canceling engine torque pulsation according to any one of claims 1-8, further **characterized by** comprising:

acquiring optimization results of the control parameters under various working conditions through experimental calibration or simulation calculation, and compiling the optimization results into a table;
when the engine and the motor work, based on actual working conditions acquired, searching for corresponding control parameters in the table and dynamically updating the control parameters.

10. A hybrid power system, **characterized in that**: the hybrid power system comprises an engine and a motor, and performs the method for canceling engine torque pulsation according to any one of claims 1-9.

Step 1

acquiring a pulsation function in which an engine torque pulsation changes with a crank connecting rod angle under various working conditions

Step 2

constructing a torsional vibration offset function in which an offset torque changes with the crank connecting rod angle, and adding control parameters to the torsional vibration offset function to optimize it, so that a sum of the offset torque and the engine torque pulsation is equal to or close to 0 in an entire angle domain of crank connecting rod angle

Step 3

acquiring state data of the hybrid power system including a system rotation speed and correcting the control parameters based on the state data

Step 4

when the engine and the motor work, acquiring the crank connecting rod angle, calculating a required offset torque according to the torsional vibration offset function, determining a corresponding offset torque command for the motor based on the required offset torque, and superimposing the offset torque command on an output control of the motor during normal operation

FIG. 1

**TRANSLATION**

**INTERNATIONAL SEARCH REPORT**

International application No.

**PCT/CN2024/079839**

**A. CLASSIFICATION OF SUBJECT MATTER**

B60W 20/15(2016.01)i; B60W 30/20(2006.01)i; B60W 10/08(2006.01)i

According to International Patent Classification (IPC) or to both national classification and IPC

**B. FIELDS SEARCHED**

Minimum documentation searched (classification system followed by classification symbols)

IPC: B60W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 精进电动科技股份有限公司, 琚龙玉, 扭矩, 转矩, 脉动, 波动, 抵消, 补偿, 转速, 修正, 校正, 优化, 相位, 提前, 延迟, 放缩, 缩放, 平移, torque, moment, pulsation, wave, compensate, speed, velocity, phase, delay, scaling

**C. DOCUMENTS CONSIDERED TO BE RELEVANT**

| Category* | Citation of document, with indication, where appropriate, of the relevant passages | Relevant to claim No. |
|---|---|---|
| Y | CN 112977394 A (JING-JIN ELECTRIC TECHNOLOGIES CO., LTD.) 18 June 2021 (2021-06-18) description, paragraphs [0040]-[0092], and figures 1-8 | 1, 2, 7-10 |
| Y | JP 2014181691 A (TOYOTA MOTOR CORP.) 29 September 2014 (2014-09-29) description, paragraphs [0006]-[0048], and figures 1-10 | 1, 2, 7-10 |
| A | JP 2000115911 A (NISSAN MOTOR CO., LTD.) 21 April 2000 (2000-04-21) entire document | 1-10 |
| A | KR 20100064603 A (HYUNDAI MOTOR CO., LTD.) 15 June 2010 (2010-06-15) entire document | 1-10 |
| A | CN 103342126 A (DONGFENG MOTOR CORP.) 09 October 2013 (2013-10-09) entire document | 1-10 |
| A | JP 2012071792 A (AISIN AW CO., LTD.) 12 April 2012 (2012-04-12) entire document | 1-10 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **08 April 2024** | **22 May 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/079839**

| Patent document cited in search report | | | Publication date (day/month/year) | Patent family member(s) | | | Publication date (day/month/year) |
|---|---|---|---|---|---|---|---|
| CN | 112977394 | A | 18 June 2021 | CN | 112977394 | B | 23 January 2024 |
| JP | 2014181691 | A | 29 September 2014 | JP | 6011404 | B2 | 19 October 2016 |
| JP | 2000115911 | A | 21 April 2000 | JP | 3454167 | B2 | 06 October 2003 |
| KR | 20100064603 | A | 15 June 2010 | KR | 101000410 | B1 | 13 December 2010 |
| CN | 103342126 | A | 09 October 2013 | CN | 103342126 | B | 20 April 2016 |
| JP | 2012071792 | A | 12 April 2012 | JP | 5553162 | B2 | 16 July 2014 |

Form PCT/ISA/210 (patent family annex) (July 2022)

**REFERENCES CITED IN THE DESCRIPTION**

**Patent documents cited in the description**

- CN 202410092003
- CN 202110186641